# FASCICULE DE BREVET EUROPEEN

(11) **EP 3 020 139 B1**
(45) Date de publication et mention de la délivrance du brevet: **15.03.2017**
(21) Numéro de dépôt: 14736802.1
(22) Date de dépôt: 08.07.2014
(51) Int. Cl.: H04B 3/54, H04L 12/403, H04L 12/28

(54) **TRANSMISSION DE BALISES DANS UN PREMIER RÉSEAU DE COMMUNICATION COHABITANT AVEC UN SECOND RÉSEAU DE COMMUNICATION**
BAKENÜBERTRAGUNG IN EINEM MIT EINEM ZWEITEN KOMMUNIKATIONSNETZWERK KOEXISTIERENDEN ERSTEN KOMMUNIKATIONSNETZWERK
BEACON TRANSMISSION IN A FIRST COMMUNICATION NETWORK CO-EXISTING WITH A SECOND COMMUNICATION NETWORK

(30) Priorité: 10.07.2013 FR 1356796
(43) Date de publication de la demande: 18.05.2016
(73) Titulaire: Sagemcom Energy & Telecom SAS, 92500 Rueil-Malmaison (FR)
(72) Inventeur: PIGEON, Nicolas, F-92500 Rueil-Malmaison (FR); SERGI, Jérémie, F-92500 Rueil-Malmaison (FR)
(74) Mandataire: Le Guen-Maillet
(86) Numéro de dépôt international: PCT/EP2014/064546
(87) Numéro de publication internationale: WO 2015/004104

(56) Documents cités:
- US-A1- 2007 097 960
- US-A1- 2009 174 532
- US-A1- 2011 255 557

## Description

La présente invention concerne une transmission de balises par un dispositif maître d'un premier réseau de communication défini au-dessus d'un réseau d'alimentation électrique, le premier réseau de communication partageant potentiellement un canal de communication avec un second réseau de communication.

Les réseaux d'alimentation électrique sont souvent utilisés pour mettre en oeuvre des communications par courants porteurs en ligne (« Powerline Communications » en anglais). Dans ce contexte, des réseaux de communication sont définis au-dessus des réseaux d'alimentation électrique. On peut citer par exemple les spécifications PRIME (« *PoweRline Intelligent Metering Evolution* » en anglais) qui permettent de définir un réseau hiérarchisé de communication au-dessus d'un réseau d'alimentation électrique, pour par exemple collecter à distance des données de mesures effectuées par des compteurs électriques intelligents (« smart meters » en anglais).

Se pose alors un problème de cohabitation de réseaux de communication basés sur des transmissions régulières de balises servant à synchroniser les dispositifs de ces réseaux de communication. Par phénomène de diaphonie, les balises transmises dans un réseau de communication peuvent se propager dans un autre réseau de communication, créant alors des collisions dans les transmissions et/ou des phénomènes de désynchronisation. En effet, étant donné qu'il est prévu que les balises soient transmises à intervalles *a priori* réguliers, le dispositif maître générant les balises ne vérifie pas si le canal de communication est disponible avant de les transmettre. Ce problème de cohabitation apparaît notamment lorsque plusieurs transformateurs sont situés dans une même sous-station et qu'un dispositif maître d'un réseau de communication est installé à chaque transformateur. Ce problème peut aussi se produire lorsque de tels transformateurs sont localisés dans des sous-stations différentes, mais que le réseau d'alimentation électrique est dense, comme c'est le cas en zone urbaine.

Le document US2009/174532 décrit un procédé transmission de balises par un dispositif maître d'un premier réseau de communication défini au-dessus d'un réseau d'alimentation électrique, le premier réseau de communication partageant potentiellement un canal de communication avec un second réseau de communication.

Le document US2011/0255557 décrit une méthode permettant une coexistence entre des dispositifs utilisant différents standards de communication par courants porteurs sur un même canal de communication.

Le document US2007/097960 décrit une méthode de coexistence pour permettre une coexistence entre deux systèmes de communication qui utilisent un même medium de communication mais ont des schémas de communication différents.

Il est souhaitable de pallier ces différents inconvénients de l'état de la technique.

Il est notamment souhaitable de fournir une solution qui permette de faire cohabiter des réseaux de communications définis au-dessus de réseaux d'alimentation électrique et basés sur des transmissions *a priori* périodiques de balises pour synchroniser les dispositifs desdits réseaux de communication, lorsque des phénomènes de diaphonie peuvent apparaître entre lesdits réseaux de communication.

Il est aussi souhaitable de fournir une solution qui puisse être facilement mise en oeuvre dans le cadre des spécifications PRIME.

Il est notamment souhaitable de fournir une solution qui soit simple à mettre en oeuvre et à faible coût.

L'invention concerne un procédé de transmission de balises par un dispositif maître d'un premier réseau de communication défini au-dessus d'un réseau d'alimentation électrique, le premier réseau de communication partageant potentiellement un canal de communication avec un second réseau de communication, le dispositif maître du premier réseau de communication étant adapté pour transmettre à intervalles *a priori* réguliers des balises pour synchroniser des communications à courants porteurs en ligne dans le premier réseau de communication, caractérisé en ce que le dispositif maître du premier réseau de communication effectue les étapes suivantes : écouter le canal de communication pour détecter d'éventuelles balises transmises dans le second réseau de communication ; lorsqu'une balise a été détectée, déterminer un instant de transmission d'une balise transmise par un dispositif maître du second réseau de communication ; et déterminer des instants de transmissions futures de balises par le dispositif maître du premier réseau de communication, de sorte que lesdites transmissions futures de balises interviennent *a priori* en même temps que des transmissions futures de balises par le dispositif maître du second réseau de communication. Ainsi, les balises transmises par le dispositif maître du premier réseau de communication masquent, du point de vue des dispositifs du premier réseau de communication, les balises transmises par le dispositif maître du second réseau de communication, et vice-versa. Les risques de collision et/ou de désynchronisation sont ainsi significativement diminués et la cohabitation des premier et second réseaux de communication est assurée.

Selon un mode de réalisation particulier, lorsque la balise détectée a été émise par le dispositif maître du second réseau de communication, le dispositif maître du premier réseau de communication effectue les étapes suivantes : déterminer un instant auquel a été reçue la balise détectée ; et prendre en compte ledit instant déterminé auquel a été reçue la balise détectée et une information de périodicité *a priori* de transmission de balises, pour déterminer lesdits instants de transmissions futures de balises par ledit dispositif maître du premier réseau de communication.

Selon un mode de réalisation particulier, lorsque la balise détectée a été émise par un autre dispositif que le dispositif maître du second réseau de communication, le dispositif maître du premier réseau de communication effectue les étapes suivantes : déterminer un instant auquel a été reçue la balise détectée ; déterminer un rang de la balise détectée parmi un ensemble de balises incluant une balise *a priori* émise par le dispositif maître du second réseau de communication ; et déterminer un instant auquel le dispositif maître du second réseau de communication a *a priori* transmis, ou va *a priori* transmettre, une balise, à partir dudit rang déterminé et une information de durée d'intervalle de temps attribué à chaque transmission de balise.

Selon un mode de réalisation particulier, après avoir activé lesdites transmissions futures de balises par le dispositif maître du premier réseau de communication, le dispositif maître du premier réseau de communication effectue les étapes suivantes : suspendre lesdites transmissions futures de balises ; écouter le canal de communication pour détecter au moins une balise transmise dans le second réseau de communication ; déterminer un instant auquel le dispositif maître du second réseau de communication a *a priori* transmis, ou va *a priori* transmettre, une balise, en fonction d'un instant auquel une balise transmise dans le second réseau de communication été détectée ; déterminer une différence temporelle entre l'instant déterminé auquel le dispositif maître du second réseau de communication a *a priori* transmis, ou va *a priori* transmettre, une balise et un desdits instants de transmissions futures de balises par le dispositif maître du premier réseau de communication ; effectuer un recalage temporel desdits instants de transmissions futures de balises par le dispositif maître du premier réseau de communication, pour compenser la différence temporelle ; et reprendre la transmission des balises en prenant en compte le recalage temporel.

Selon un mode de réalisation particulier, les communications par courants porteurs en ligne sont établies selon les spécifications PRIME.

L'invention concerne également un dispositif maître d'un premier réseau de communication défini au-dessus d'un réseau d'alimentation électrique, le premier réseau de communication partageant potentiellement un canal de communication avec un second réseau de communication, le dispositif maître du premier réseau de communication étant adapté pour transmettre à intervalles *a priori* réguliers des balises pour synchroniser des communications à courants porteurs en ligne dans le premier réseau de communication. Le dispositif maître du premier réseau de communication est tel qu'il comporte : des moyens pour écouter le canal de communication pour détecter d'éventuelles balises transmises dans le second réseau de communication ; mis en oeuvre lorsqu'une balise a été détectée, des moyens pour déterminer un instant de transmission d'une balise transmise par un dispositif maître du second réseau de communication ; et des moyens pour déterminer des instants de transmissions futures de balises par le dispositif maître du premier réseau de communication, de sorte que lesdites transmissions futures de balises interviennent *a priori* en même temps que des transmissions futures de balises par le dispositif maître du second réseau de communication.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système électrique dans lequel l'invention peut être mise en oeuvre ;
- la Fig. 2 illustre schématiquement un exemple de tout ou partie d'une architecture matérielle d'un dispositif du système électrique, tel qu'un concentrateur de données ;
- la Fig. 3A illustre schématiquement un premier exemple de deux réseaux hiérarchisés de communication ;
- la Fig. 3B illustre schématiquement un second exemple de deux réseaux hiérarchisés de communication ;
- la Fig. 4 illustre schématiquement un format de balise transmises dans un réseau hiérarchisé de communication ;
- la Fig. 5 illustre schématiquement un algorithme de transmission de balises dans le réseau hiérarchisé de communication ;
- la Fig. 6 illustre schématiquement un algorithme de resynchronisation dans le cadre de la transmission de balises dans le réseau hiérarchisé de communication.

La présente invention est détaillée ci-après dans le contexte de réseaux hiérarchisés de communication définis au-dessus de réseaux d'alimentation électrique. La présente invention s'applique cependant aussi dans le cadre de réseaux non hiérarchisés de communication définis au-dessus de réseaux d'alimentation électrique, dans lesquels des dispositifs maître respectifs transmettent des balises pour permettre à d'autres dispositifs de se synchroniser dans le cadre de communications par courants porteurs en ligne.

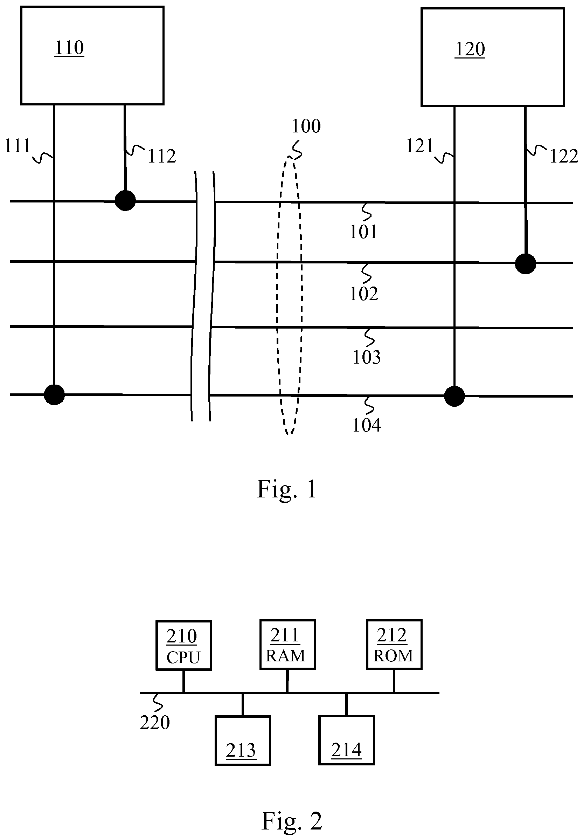

La Fig. 1 illustre schématiquement un système électrique dans lequel l'invention peut être mise en oeuvre.

Le système électrique de la Fig. 1 comporte un réseau d'alimentation électrique 100 constitué d'une pluralité de fils, un fil étant dédié au neutre et au moins un fil étant dédié à au moins une phase. Dans l'exemple de réalisation représenté par la Fig. 1, le réseau d'alimentation électrique 100 est un système à trois phases, et est donc constitué de quatre fils: un fil de neutre 104, un fil d'une première phase 101, un fil d'une seconde phase 102 et un fil de troisième phase 103. La séparation des phases est donc de 120 degrés entre les deux phases, et serait de 180 degrés dans le cas d'un système à deux phases, puisque dans les réseaux électriques polyphasés, les phases sont en général à égale distance angulaire.

Le système électrique de la Fig. 1 comporte en outre un compteur électrique 120, c'est-à-dire un dispositif servant à mesurer la quantité d'énergie électrique consommée par une installation électrique que le compteur électrique 120 est en charge de superviser. Le compteur électrique 120 est connecté à un des fils de phase du réseau d'alimentation électrique 100 ainsi qu'au fil de neutre, par des liens respectifs 122 et 121. On est, dans ce cas, en présence d'un compteur électrique monophasé. Le système électrique de la Fig. 1 pourrait reposer sur une mise en oeuvre d'un compteur électrique polyphasé.

Plusieurs compteurs électriques sont ainsi connectés au réseau d'alimentation électrique 100, certains étant connectés sur une phase et d'autres étant connectés sur une autre phase.

Le système électrique de la Fig. 1 comporte en outre un concentrateur de données 110 en charge de collecter des données de mesure effectuées par les compteurs électriques connectés au réseau d'alimentation électrique 100. Le concentrateur de données 110 est connecté à un des fils de phase du réseau d'alimentation électrique 100 ainsi qu'au fil de neutre, par des liens respectifs 112 et 111. On voit sur l'exemple de la Fig. 1 que le concentrateur de données 110 et le compteur électrique 120 sont connectés au réseau d'alimentation électrique 100 via des phases distinctes. Le concentrateur de données 110 et le compteur électrique 120 pourraient être connectés au réseau d'alimentation électrique 100 via une même phase, voire via plusieurs phases.

La Fig. 2 illustre schématiquement un exemple d'architecture matérielle d'au moins une partie du compteur électrique 120 et/ou du concentrateur de données 110.

Considérons la Fig. 2 dans le cadre du concentrateur de données 110. Le concentrateur de données 110 comprend alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) 213 ; un ensemble 214 d'interfaces de connexion permettant de connecter le concentrateur de données 110 au réseau d'alimentation électrique 100.

Le processeur 210 est capable d'exécuter des instructions chargées dans la RAM 211 à partir de la ROM 212, d'une mémoire externe (non représentée), d'un support de stockage, tel qu'une carte SD, ou d'un réseau de communication. Lorsque le concentrateur de données 110 est mis sous tension, le processeur 210 est capable de lire de la RAM 211 des instructions et de les exécuter. Ces instructions forment un programme d'ordinateur causant la mise en oeuvre, par le processeur 210, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

Le compteur électrique 120 peut être mis en oeuvre selon une même architecture matérielle.

Un réseau hiérarchisé de communication est défini au-dessus du réseau d'alimentation électrique 100 pour permettre au concentrateur de données 110 et aux compteurs électriques d'échanger des données grâce à des transmissions par courants porteurs en ligne. Le concentrateur de données 110 est alors typiquement la racine (« root » en anglais) du réseau hiérarchisé de communication. On l'appelle aussi parfois *noeud de base.* D'une manière générale, le concentrateur de données 110 est *maître* du réseau hiérarchisé de communication, c'est-à-dire que le concentrateur de données 110 transmet des balises à intervalles *a priori* réguliers pour donner une référence temporelle permettant aux autres dispositifs du réseau hiérarchisé de communication de se synchroniser. Le but de ces balises est de faire circuler une information de structure de trame au niveau MAC (« Médium Access Control » en anglais). Chaque balise émise par le maître du réseau hiérarchisé de communication a une position prédéfinie au sein de la structure de trame. Les balises sont ainsi transmises par le maître du réseau hiérarchisé de communication à des intervalles de temps *a priori* fixes et sont utilisées en tant que mécanisme de synchronisation au niveau de la couche MAC.

Pour transmettre les balises, et effectuer divers traitements, le maître du réseau hiérarchisé de communication dispose d'une horloge interne. Cette horloge interne peut être synchronisée avec une horloge interne d'un autre maître d'un autre réseau hiérarchisé de communication, grâce à une référence temporelle ou fréquentielle externe. Cette horloge interne peut aussi dériver par rapport à l'horloge interne d'un autre maître d'un autre réseau hiérarchisé de communication.

La hiérarchie du réseau de communication définit ainsi des rattachements de noeuds les uns aux autres. On dit qu'un premier noeud est rattaché à un second noeud, lorsque le premier noeud utilise ledit second noeud comme référence de synchronisation dans le réseau de communication et utilise ledit second noeud comme relais pour échanger des données avec le concentrateur de données 110. Cette fonction de relais est assurée par des compteurs électriques que l'on appelle parfois *noeuds commutateurs.* La fonction de relais permet à un compteur électrique de communiquer avec un autre compteur électrique ou avec le concentrateur de données 110, si les caractéristiques du lien physique qui les relie (éventuellement par diaphonie) ne le permettent pas directement, et ce, même si ces deux entités sont connectées physiquement sur une même phase.

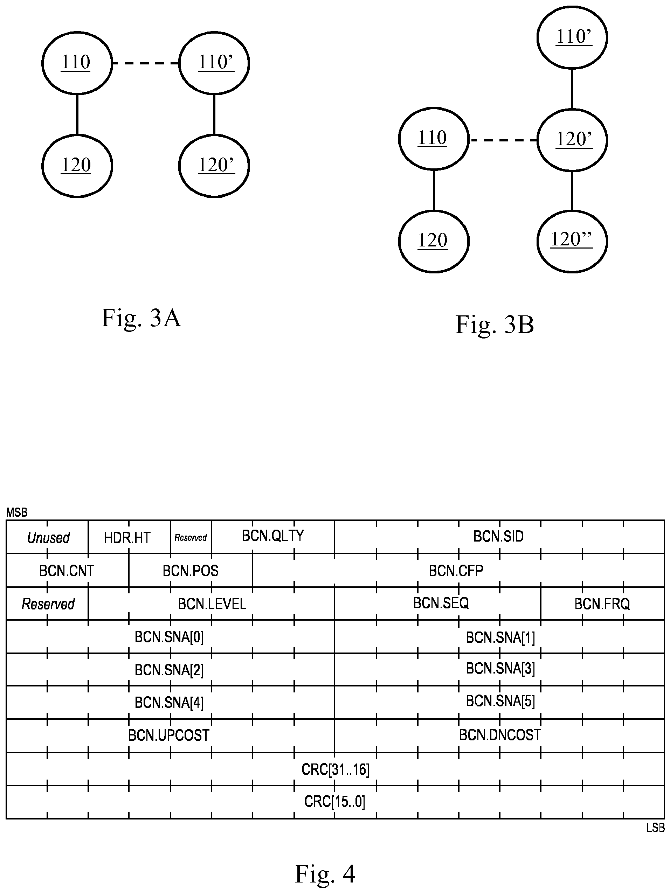

La Fig. 3A illustre schématiquement un premier exemple de deux réseaux hiérarchisés de communication de même type. Un premier réseau hiérarchisé de communication comporte un concentrateur de données 110' et au moins un compteur électrique 120'. Le compteur électrique 120' représenté sur la Fig. 3A est rattaché directement au concentrateur de données 110'. Un second réseau hiérarchisé de communication comporte le concentrateur de données 110 et au moins le compteur électrique 120. Sur la Fig. 3A, le compteur électrique 120 est représenté directement rattaché au concentrateur de données 110.

La Fig. 3B illustre schématiquement un second exemple de deux réseaux hiérarchisés de communication de même type. Un premier réseau hiérarchisé de communication comporte le concentrateur de données 110' et au moins deux compteur électriques 120' et 120". Le compteur électrique 120' représenté sur la Fig. 3B est rattaché directement au concentrateur de données 110'. Le compteur électrique 120" représenté sur la Fig. 3B est rattaché au compteur électrique 120', qui sert alors de relais entre le compteur électrique 120" et le concentrateur de données 110'. Le compteur électrique 120' joue alors le rôle de *noeud commutateur.* Un second réseau hiérarchisé de communication comporte le concentrateur de données 110 et au moins le compteur électrique 120. Sur la Fig. 3B, le compteur électrique 120 est représenté directement attaché au concentrateur de données 110.

Sur les Figs. 3A et 3B, les lignes pleines représentent les rattachements de noeuds dans leurs réseaux hiérarchisés de communication respectifs. Les lignes pointillées représentent des chemins de diaphonie pouvant générer des conflits de transmission entre les premier et second réseaux hiérarchisés de communication. Ainsi, un chemin de diaphonie existe entre le concentrateur de données 110' et le concentrateur de données 110 sur la Fig. 3A, et un chemin de diaphonie existe entre le noeud commutateur 120' et le concentrateur de données 110 sur la Fig. 3B. A cause de ce phénomène de diaphonie, les premier et second réseaux hiérarchisés de communication partagent un même canal de communication. Le concentrateur de données 110 et le compteur électrique 120 sont alors en mesure de recevoir, grâce au phénomène de diaphonie, des balises transmises par le concentrateur de données 110' et/ou par le compteur électrique 120', ce qui engendre des conflits de transmission.

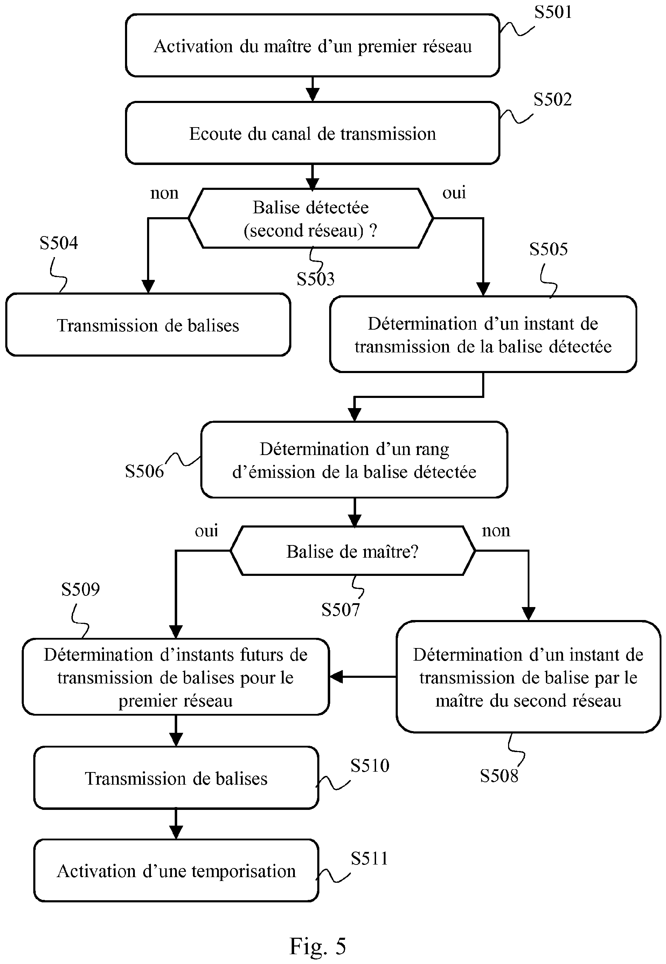

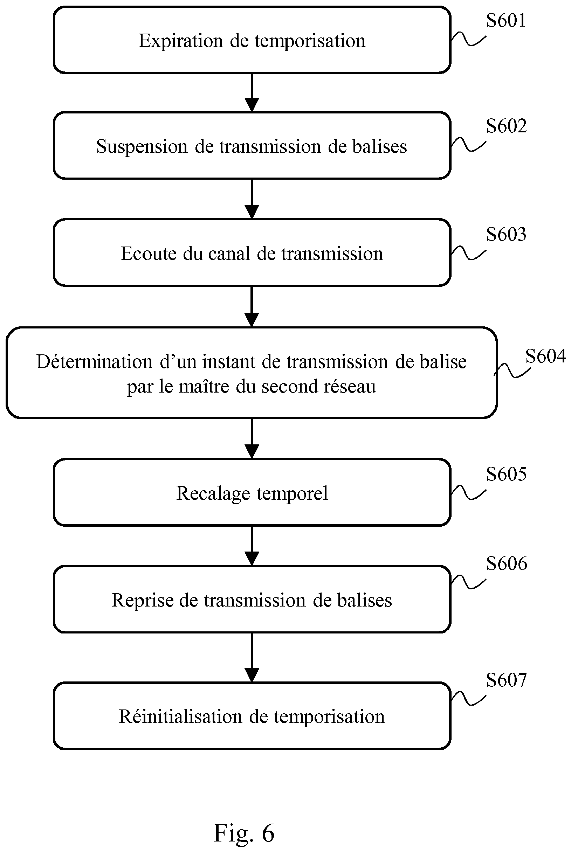

Les spécifications PRIME sont préférentiellement mises en oeuvre pour permettre d'établir des communications au sein du réseau hiérarchisé de communication. Un mécanisme selon la présente invention est cependant mis en oeuvre pour gérer les conflits (de transmission) entre les deux réseaux hiérarchisés de communication, tel que décrit ci-après en relation avec les Figs. 5 et 6. En effet, les balises devant être transmises à intervalles *a priori* réguliers, aucune vérification de la disponibilité du canal de communication n'est effectuée avant transmission d'une balise. On notera que dans le cadre des spécifications PRIME, les communications en dehors des balises sont effectuées selon un principe de CSMA/CA (« Carrier Sense Multiple Access with Collision Avoidance »), ce qui évite les collisions entre de telles communications, même au sein de réseaux de communication distincts qui cohabitent.

La Fig. 5 illustre schématiquement un algorithme de transmission de balises, adapté pour gérer les conflits (de transmission) entre deux réseaux hiérarchisés de communication.

Dans une étape S501, le maître d'un premier réseau hiérarchisé de communication, *e.g.* le concentrateur de données 110, est activé.

Dans une étape S502 suivante, le maître du premier réseau hiérarchisé de communication écoute le canal de communication pour détecter d'éventuelles transmissions de balises.

Dans une étape S503 suivante, le maître du premier réseau hiérarchisé de communication vérifie si au moins une balise d'un second réseau de communication a été reçue pendant une période de temps prédéfinie. Si une telle balise a été détectée, une étape S505 est effectuée ; sinon, une étape S504 est effectuée.

Dans l'étape S504, le maître du premier réseau hiérarchisé de communication considère qu'il n'y a pas de conflit avec un autre réseau hiérarchisé de communication. Le maître du premier réseau transmet alors des balises à intervalles réguliers pour permettre au compteur électrique 120, et tout autre compteur électrique du premier réseau hiérarchisé de communication de se synchroniser. Il est alors mis fin à l'algorithme.

Dans l'étape S505, le maître du premier réseau hiérarchisé de communication considère qu'il y a conflit avec un autre réseau hiérarchisé de communication. Le maître du premier réseau hiérarchisé de communication détermine alors un instant de transmission de la balise détectée. Par exemple, le maître du premier réseau hiérarchisé de communication enregistre à quel moment, selon une référence temporelle interne ou externe, la balise a été reçue par le maître du premier réseau hiérarchisé de communication, et récupère cette valeur dans l'étape S505.

Dans une étape S506 suivante, le maître du premier réseau hiérarchisé de communication détermine un rang d'émission de la balise détectée au sein d'un ensemble de balises transmises *a priori* périodiquement dans le second réseau de communication.

En prenant comme exemple les spécifications PRIME, cette information de rang est incluse dans la balise détectée. Un format de balise selon les spécifications PRIME est présenté à la Fig. 4. Un champ BCN.CNT indique le nombre d'intervalles de temps (« time slots » en anglais) réservés par trame pour transmettre des balises. Ces intervalles de temps sont de durées fixes et typiquement égales entre elles. Le premier intervalle de temps en séquence de la trame est réservé aux transmissions de balises par le noeud de base, c'est-à-dire le maître du réseau hiérarchisé de communication. Un champ BCN.SLT indique l'index de l'intervalle de temps utilisé pour transmettre la balise. Si par exemple le compteur électrique 120' agissant comme noeud commutateur est désigné, par le concentrateur de données 110' agissant comme noeud de base, pour transmettre des balises dans le second intervalle de temps en séquence de la trame, ce champ comporte la valeur « 1 » pour chaque balise transmise par le compteur électrique 120'.

Dans une étape S507 suivante, le maître du premier réseau hiérarchisé de communication détermine si la balise détectée a été émise par le maître du second réseau hiérarchisé de communication. Dans l'exemple précédent basé sur les spécifications PRIME, le maître du premier réseau hiérarchisé de communication détermine si la valeur du champ BCN.SLT de la balise détectée est « 0 ». Si la balise a été émise par le maître du second réseau hiérarchisé de communication, une étape S509 est effectuée ; sinon, une étape S508 est effectuée.

Il convient de noter que lorsque les réseaux de communication ne sont pas hiérarchisés, c'est-à-dire que seul le maître est autorisé à transmettre des balises, alors l'algorithme passe directement de l'étape S505 à l'étape S509.

Dans l'étape S508, le maître du premier réseau hiérarchisé de communication détermine un instant de transmission d'une balise *a priori* émise par le maître du second réseau hiérarchisé de communication, en fonction du rang de la balise détectée et de la durée de chaque intervalle de temps dédié à une transmission de balise. Par exemple, le maître du premier réseau hiérarchisé de communication détermine l'instant de transmission de la balise émise par le maître du second réseau hiérarchisé de communication dans la même trame que la balise détectée. Le maître du premier réseau hiérarchisé de communication peut, en variante, déterminer un instant de transmission d'une balise que le maître du second réseau hiérarchisé de communication va *a priori* ultérieurement émettre. Puis, l'étape S509 est effectuée.

Dans l'étape S509, le maître du premier réseau hiérarchisé de communication détermine des instants de transmissions futures de balises par le maître du premier réseau hiérarchisé de communication pour synchroniser les noeuds du premier réseau hiérarchisé de communication. En d'autres termes, le maître du premier réseau hiérarchisé de communication détermine des instants futurs de débuts respectifs de trames du premier réseau hiérarchisé de communication. Le maître du premier réseau hiérarchisé de communication détermine ces instants de sorte à émettre ses balises en même temps que le maître du second réseau hiérarchisé de communication émettra *a priori* les siennes, la périodicité de transmission *a priori* des balises étant prédéfinie. Ainsi, du point de vue des noeuds du premier réseau hiérarchisé de communication, les balises émises par le maître du premier réseau hiérarchisé de communication masquent les balises émises par le maître du second réseau hiérarchisé de communication ; et vice versa, du point de vue des noeuds du second réseau hiérarchisé de communication, les balises émises par le maître du second réseau hiérarchisé de communication masquent les balises émises par le maître du premier réseau hiérarchisé de communication. Les conflits entre les deux réseaux hiérarchisés de communication sont ainsi évités.

Dans une étape S510 suivante, le maître du premier réseau hiérarchisé de communication transmet des balises aux instants respectifs déterminés à l'étape S509.

Dans une étape optionnelle S511 suivante, le maître du premier réseau hiérarchisé de communication active une temporisation T dont la durée est prédéfinie en fonction d'une dérive de l'horloge du maître du premier réseau hiérarchisé de communication par rapport à l'horloge du maître du second réseau hiérarchisé de communication. Un algorithme de gestion de cette dérive est détaillé ci-après en relation avec la Fig. 6.

La Fig. 6 illustre schématiquement un algorithme de resynchronisation dans le cadre de la transmission de balises de la Fig. 5.

Dans une étape S601, le maître du premier réseau hiérarchisé de communication détecte que la temporisation T a expiré.

Dans une étape S602 suivante, le maître du premier réseau hiérarchisé de communication suspend la transmission de balises initiée à l'étape S510. Cela signifie qu'une ou plusieurs trames peuvent s'écouler dans le premier réseau hiérarchisé de communication sans que le maître du premier réseau hiérarchisé de communication ne transmette de balises.

Les spécifications PRIME définissent un nombre N_{miss-beacon} de balises consécutives erronées ou manquantes qu'un compteur électrique peut ignorer avant détachement du réseau hiérarchisé de communication. En d'autres termes, tant que la suspension de transmission de balises ne dure pas plus d'un nombre égal à N_{miss-beacon} de trames consécutives, le compteur électrique 120 ne se détache pas du premier réseau hiérarchisé de communication.

Dans une étape S603 suivante, le maître du premier réseau hiérarchisé de communication écoute le canal de communication pour détecter au moins une transmission de balise ayant lieu dans le second réseau hiérarchisé de communication.

Dans une étape S604 suivante, le maître du premier réseau hiérarchisé de communication détermine un instant de transmission d'une balise émise par le maître du second réseau hiérarchisé de communication. Comme déjà expliqué en relation avec la Fig. 5, le maître du premier réseau hiérarchisé de communication peut avoir détecté une balise émise par le maître du second réseau de communication ou une balise émise par un compteur électrique agissant comme noeud commutateur. En variante, le maître du premier réseau hiérarchisé de communication peut déterminer un instant de transmission d'une balise que le maître du second réseau hiérarchisé de communication va *a priori* ultérieurement émettre.

Dans une étape S605 suivante, le maître du premier réseau hiérarchisé de communication effectue un recalage temporel des instants déterminés à l'étape S509, en fonction d'une différence entre l'instant déterminé à l'étape S604 et l'instant correspondant déterminé à l'étape 509. Ainsi, si le maître du premier réseau hiérarchisé de communication détecte qu'une différence temporelle existe entre l'instant auquel il aurait dû transmettre une balise et l'instant auquel le maître du second réseau hiérarchisé de communication a transmis sa balise, alors le maître du premier réseau hiérarchisé de communication applique une compensation de cette différence temporelle pour les futures transmissions de balises dans le premier réseau hiérarchisé de communication.

Dans une étape S606 suivante, le maître du premier réseau hiérarchisé de communication reprend la transmission des balises, en compensant la différence temporelle déterminée à l'étape S605.

Dans une étape S607 suivante, le maître du premier réseau hiérarchisé de communication réinitialise la temporisation T, pour permettre une nouvelle exécution ultérieure de l'algorithme de la Fig. 6.

## Revendications

1. Procédé de transmission de balises par un dispositif maître (110) d'un premier réseau de communication défini au-dessus d'un réseau d'alimentation électrique (100), le premier réseau de communication partageant potentiellement un canal de communication avec un second réseau de communication, le dispositif maître du premier réseau de communication étant adapté pour transmettre à intervalles *a priori* réguliers des balises pour synchroniser des communications à courants porteurs en ligne dans le premier réseau de communication, le dispositif maître du premier réseau de communication effectuant les étapes suivantes :
- écouter (S502) le canal de communication pour détecter d'éventuelles balises transmises dans le second réseau de communication ;
- lorsqu'une balise a été détectée, déterminer (S505 ; S508) un instant de transmission d'une balise transmise par un dispositif maître (110') du second réseau de communication ; et ;
**caractérisé en ce que** le dispositif maître du premier réseau de communication effectue en outre l'étape suivante :
- déterminer (S509) des instants de transmissions futures de balises par le dispositif maître du premier réseau de communication, de sorte que lesdites transmissions futures de balises interviennent *a priori* en même temps que des transmissions futures de balises par le dispositif maître du second réseau de communication.

2. Procédé selon la revendication 1, **caractérisé en ce que**, lorsque la balise détectée a été émise par le dispositif maître du second réseau de communication, le dispositif maître du premier réseau de communication effectue les étapes suivantes :
- déterminer (S505) un instant auquel a été reçue la balise détectée ; et
- prendre en compte ledit instant déterminé auquel a été reçue la balise détectée et une information de périodicité *a priori* de transmission de balises, pour déterminer (S509) lesdits instants de transmissions futures de balises par ledit dispositif maître du premier réseau de communication.

3. Procédé selon l'une quelconque des revendications 1 et 2, **caractérisé en ce que**, lorsque la balise détectée a été émise par un autre dispositif (120') que le dispositif maître du second réseau de communication, le dispositif maître du premier réseau de communication effectue les étapes suivantes :
- déterminer (S505) un instant auquel a été reçue la balise détectée ;
- déterminer (S506) un rang de la balise détectée parmi un ensemble de balises incluant une balise *a priori* émise par le dispositif maître du second réseau de communication ; et
- déterminer (S508) un instant auquel le dispositif maître du second réseau de communication a *a priori* transmis, ou va *a priori* transmettre, une balise, à partir dudit rang déterminé et une information de durée d'intervalle de temps attribué à chaque transmission de balise.

4. Procédé selon l'une quelconque des revendications 1 à 3, **caractérisé en ce que**, après avoir activé (S510) lesdites transmissions futures de balises par le dispositif maître du premier réseau de communication, le dispositif maître du premier réseau de communication effectue les étapes suivantes :
- suspendre (S602) lesdites transmissions futures de balises ;
- écouter (S603) le canal de communication pour détecter au moins une balise transmise dans le second réseau de communication ;
- déterminer (S604) un instant auquel le dispositif maître du second réseau de communication a *a priori* transmis, ou va *a priori* transmettre, une balise, en fonction d'un instant auquel une balise transmise dans le second réseau de communication a été détectée ;
- déterminer une différence temporelle entre l'instant déterminé auquel le dispositif maître du second réseau de communication a *a priori* transmis, ou va *a priori* transmettre, une balise et un desdits instants de transmissions futures de balises par le dispositif maître du premier réseau de communication ;
- effectuer (S605) un recalage temporel desdits instants de transmissions futures de balises par le dispositif maître du premier réseau de communication, pour compenser la différence temporelle ; et
- reprendre (S606) la transmission des balises en prenant en compte le recalage temporel.

5. Procédé selon l'une quelconque des revendications 1 à 4, **caractérisé en ce que** les communications par courants porteurs en ligne sont établies selon les spécifications PRIME.

6. Programme d'ordinateur, **caractérisé en ce qu'**il comprend des instructions pour mettre en oeuvre, par un dispositif maître d'un réseau de communication, le procédé selon l'une quelconque des revendications 1 à 5, lorsque ledit programme est exécuté par un processeur dudit dispositif maître.

7. Moyens de stockage, **caractérisés en ce qu'**ils stockent un programme d'ordinateur comprenant des instructions pour mettre en oeuvre, par un dispositif maître d'un réseau de communication, le procédé selon l'une quelconque des revendications 1 à 5, lorsque ledit programme est exécuté par un processeur dudit dispositif maître.

8. Dispositif maître (110) d'un premier réseau de communication défini au-dessus d'un réseau d'alimentation électrique (100), le premier réseau de communication partageant potentiellement un canal de communication avec un second réseau de communication, le dispositif maître du premier réseau de communication étant adapté pour transmettre à intervalles *a priori* réguliers des balises pour synchroniser des communications à courants porteurs en ligne dans le premier réseau de communication, le dispositif maître du premier réseau de communication comportant :
- des moyens pour écouter (S502) le canal de communication pour détecter d'éventuelles balises transmises dans le second réseau de communication ;
- mis en oeuvre lorsqu'une balise a été détectée, des moyens pour déterminer (S505 ; S508) un instant de transmission d'une balise transmise par un dispositif maître (110') du second réseau de communication ; et ;
**caractérisé en ce que** le dispositif maître du premier réseau de communication comporte en outre :
- des moyens pour déterminer (S509) des instants de transmissions futures de balises par le dispositif maître du premier réseau de communication, de sorte que lesdites transmissions futures de balises interviennent *a priori* en même temps que des transmissions futures de balises par le dispositif maître du second réseau de communication.

## Patentansprüche

1. Verfahren zur Bakenübertragung durch eine Master-Vorrichtung (110) eines ersten Kommunikationsnetzes, das über einem elektrischen Versorgungsnetz (100) definiert ist, wobei das erste Kommunikationsnetz potentiell einen Kommunikationskanal mit einem zweiten Kommunikationsnetz gemeinsam benutzt, wobei die Master-Vorrichtung des ersten Kommunikationsnetzes dafür eingerichtet ist, in a priori regelmäßigen Intervallen Baken zu übertragen, um Datenübertragungen über Stromkabel in dem ersten Kommunikationsnetz zu synchronisieren, wobei die Master-Vorrichtung des ersten Kommunikationsnetzes die folgenden Schritte ausführt:
- Abhören (S502) des Kommunikationskanals, um eventuelle Baken zu erkennen, die in dem zweiten Kommunikationsnetz übertragen werden;
- wenn eine Bake erkannt worden ist, Bestimmen (S505; S508) eines Übertragungszeitpunkts einer Bake, die von einer Master-Vorrichtung (110') des zweiten Kommunikationsnetzes übertragen wird; und **dadurch gekennzeichnet, dass** die Master-Vorrichtung des ersten Kommunikationsnetzes außerdem den folgenden Schritt ausführt:
- Bestimmen (S509) der Zeitpunkte zukünftiger Übertragungen von Baken durch die Master-Vorrichtung des ersten Kommunikationsnetzes, derart, dass die zukünftigen Übertragungen von Baken a priori gleichzeitig mit zukünftigen Übertragungen von Baken durch die Master-Vorrichtung des zweiten Kommunikationsnetzes erfolgen.

2. Verfahren nach Anspruch 1, **dadurch gekennzeichnet, dass**, wenn die erkannte Bake von der Master-Vorrichtung des zweiten Kommunikationsnetzes gesendet worden ist, die Master-Vorrichtung des ersten Kommunikationsnetzes die folgenden Schritte ausführt:
- Bestimmen (S505) eines Zeitpunkts, zu dem die erkannte Bake empfangen worden ist; und
- Berücksichtigen dieses bestimmten Zeitpunkts, zu dem die erkannte Bake empfangen worden ist, und einer Information über die A-priori-Periodizität der Übertragung von Baken, um die Zeitpunkte zukünftiger Übertragungen von Baken durch die Master-Vorrichtung des ersten Kommunikationsnetzes zu bestimmen (S509).

3. Verfahren nach einem der Ansprüche 1 und 2, **dadurch gekennzeichnet, dass**, wenn die erkannte Bake von einer anderen Vorrichtung (120') als der Master-Vorrichtung des zweiten Kommunikationsnetzes gesendet worden ist, die Master-Vorrichtung des ersten Kommunikationsnetzes die folgenden Schritte ausführt:
- Bestimmen (S505) eines Zeitpunkts, zu dem die erkannte Bake empfangen worden ist;
- Bestimmen (S506) eines Ranges der erkannten Bake unter einer Menge von Baken, welche eine Bake enthält, die a priori von der Master-Vorrichtung des zweiten Kommunikationsnetzes gesendet wurde; und
- Bestimmen (S508) eines Zeitpunkts, zu dem die Master-Vorrichtung des zweiten Kommunikationsnetzes eine Bake a priori übertragen hat oder a priori übertragen wird, ausgehend von dem bestimmten Rang und einer Information über die Dauer des Zeitintervalls, das jeder Bakenübertragung zugewiesen ist.

4. Verfahren nach einem der Ansprüche 1 bis 3, **dadurch gekennzeichnet, dass** die Master-Vorrichtung des ersten Kommunikationsnetzes, nachdem sie die zukünftiger Übertragungen von Baken durch die Master-Vorrichtung des ersten Kommunikationsnetzes aktiviert hat (S510), die folgenden Schritte ausführt:
- Aussetzen (S602) der zukünftigen Übertragungen von Baken;
- Abhören (S603) des Kommunikationskanals, um wenigstens eine Bake zu erkennen, die in dem zweiten Kommunikationsnetz übertragen wird;
- Bestimmen (S604) eines Zeitpunkts, zu dem die Master-Vorrichtung des zweiten Kommunikationsnetzes eine Bake a priori übertragen hat oder a priori übertragen wird, in Abhängigkeit von einem Zeitpunkt, zu dem eine in dem zweiten Kommunikationsnetz übertragene Bake erkannt worden ist;
- Bestimmen einer Zeitdifferenz zwischen dem bestimmten Zeitpunkt, zu dem die Master-Vorrichtung des zweiten Kommunikationsnetzes eine Bake a priori übertragen hat oder a priori übertragen wird, und einem der Zeitpunkte zukünftiger Übertragungen von Baken durch die Master-Vorrichtung des ersten Kommunikationsnetzes;
- Durchführen (S605) einer zeitlichen Neueinstellung der Zeitpunkte zukünftiger Übertragungen von Baken durch die Master-Vorrichtung des ersten Kommunikationsnetzes, um die Zeitdifferenz zu kompensieren; und
- Wiederaufnehmen (S606) der Übertragung der Baken unter Berücksichtigung der zeitlichen Neueinstellung.

5. Verfahren nach einem der Ansprüche 1 bis 4, **dadurch gekennzeichnet, dass** die Datenübertragungen über Stromkabel gemäß den PRIME-Spezifikationen durchgeführt werden.

6. Computerprogramm, **dadurch gekennzeichnet, dass** es Anweisungen zur Durchführung, durch eine Master-Vorrichtung eines Kommunikationsnetzes, des Verfahren nach einem der Ansprüche 1 bis 5, wenn das Programm von einem Prozessor der Master-Vorrichtung ausgeführt wird, umfasst.

7. Speichermittel, **dadurch gekennzeichnet, dass** sie ein Computerprogramm speichern, welches Anweisungen zur Durchführung, durch eine Master-Vorrichtung eines Kommunikationsnetzes, des Verfahren nach einem der Ansprüche 1 bis 5, wenn das Programm von einem Prozessor der Master-Vorrichtung ausgeführt wird, umfasst.

8. Master-Vorrichtung (110) eines ersten Kommunikationsnetzes, das über einem elektrischen Versorgungsnetz (100) definiert ist, wobei das erste Kommunikationsnetz potentiell einen Kommunikationskanal mit einem zweiten Kommunikationsnetz gemeinsam benutzt, wobei die Master-Vorrichtung des ersten Kommunikationsnetzes dafür eingerichtet ist, in a priori regelmäßigen Intervallen Baken zu übertragen, um Datenübertragungen über Stromkabel in dem ersten Kommunikationsnetz zu synchronisieren, wobei die Master-Vorrichtung des ersten Kommunikationsnetzes aufweist:
Mittel zum Abhören (S502) des Kommunikationskanals, um eventuelle Baken zu erkennen, die in dem zweiten Kommunikationsnetz übertragen werden;
- Anwendung, wenn eine Bake erkannt worden ist, der Mittel zum Bestimmen (S505; S508) eines Übertragungszeitpunkts einer Bake, die von einer Master-Vorrichtung (110') des zweiten Kommunikationsnetzes übertragen wird; und
**dadurch gekennzeichnet, dass** die Master-Vorrichtung des ersten Kommunikationsnetzes außerdem aufweist:
- Mittel zum Bestimmen (S509) der Zeitpunkte zukünftiger Übertragungen von Baken durch die Master-Vorrichtung des ersten Kommunikationsnetzes, derart, dass die zukünftigen Übertragungen von Baken a priori gleichzeitig mit zukünftigen Übertragungen von Baken durch die Master-Vorrichtung des zweiten Kommunikationsnetzes erfolgen.

## Claims

1. Method for transmitting beacons by a master device (110) of a first communication network defined over an electrical power supply network (100), the first communication network potentially sharing a communication channel with a second communication network, the master device of the first communication network being suitable for transmitting, at *a priori* regular intervals, beacons for synchronizing power line communications in the first communication network, the master device of the first communication network performing the following steps:
- listening (S502) to the communication channel to detect any beacons transmitted in the second communication network;
- when a beacon has been detected, determining (S505; S508) an instant of transmission of a beacon transmitted by a master device (110') of the second communication network; and; **characterized in that** the master device of the first communication network further performs the following step:
- determining (S509) instants of future transmissions of beacons by the master device of the first communication network, such that said future transmissions of beacons occur *a priori* at the same time as future transmissions of beacons by the master device of the second communication network.

2. Method according to Claim 1, **characterized in that**, when the beacon detected has been emitted by the master device of the second communication network, the master device of the first communication network performs the following steps;
- determining (S505) an instant at which the detected beacon was received; and
- taking into account said determined instant at which the detected beacon was received and information on *a priori* periodicity of transmission of beacons, to determine (S509) said instants of future transmissions of beacons by said master device of the first communication network.

3. Method according to either one of Claims 1 and 2, **characterized in that**, when the detected beacon has been emitted by a device (120') other than the master device of the second communication network, the master device of the first communication network performs the following steps:
- determining (S505) an instant at which the detected beacon was received;
- determining (S506) a rank of the detected beacon out of a set of beacons including a beacon *a priori* emitted by the master device of the second communication network; and
- determining (S508) an instant at which the master device of the second communication network has *a priori* transmitted, or will *a priori* transmit, a beacon, from said determined rank and information on the time interval duration assigned to each beacon transmission.

4. Method according to any one of Claims 1 to 3, **characterized in that**, after having activated (S510) said future transmissions of beacons by the master device of the first communication network, the master device of the first communication network performs the following steps:
- suspending (S602) said future transmissions of beacons;
- listening (S603) to the communication channel to detect at least one beacon transmitted in the second communication network;
- determining (S604) an instant at which the master device of the second communication network has *a priori* transmitted, or will *a priori* transmit, a beacon, as a function of an instant at which a beacon transmitted in the second communication network was detected;
- determining a time difference between the determined instant at which the master device of the second communication network has *a priori* transmitted, or will *a priori* transmit, a beacon and one of said instants of future transmissions of beacons by the master device of the first communication network;
- performing (S605) a time readjustment of said instants of future transmissions of beacons by the master device of the first communication network, to compensate the time difference; and
- repeating (S606) the transmission of the beacons by taking into account the time readjustment.

5. Method according to any one of Claims 1 to 4, **characterized in that** the power line communications are established according to PRIME specifications.

6. Computer program, **characterized in that** it comprises instructions for implementing, by a master device of a communication network, the method according to any one of Claims 1 to 5, when said program is run by a processor of said master device.

7. Storage means, **characterized in that** they store a computer program comprising instructions for implementing, by a master device of a communication network, the method according to any one of Claims 1 to 5, when said program is run by a processor of said master device.

8. Master device (110) of a first communication network defined over an electrical power supply network (100), the first communication network potentially sharing a communication channel with a second communication network, the master device of the first communication network being suitable for transmitting, at *a priori* regular intervals, beacons for synchronizing power line communications in the first communication network, the master device of the first communication network comprising:
- means for listening (S502) to the communication channel to detect any beacons transmitted in the second communication network;
- implementing, when a beacon has been detected, means for determining (S505; S508) an instant of transmission of a beacon transmitted by a master device (110') of the second communication network; and;
**characterized in that** the master device of the first communication network further comprises:
- means for determining (S509) instants of future transmissions of beacons by the master device of the first communication network, such that said future transmissions of beacons occur *a priori* at the same time as future transmissions of beacons by the master device of the second communication network.
